# EUROPEAN PATENT APPLICATION

(11) **EP 1 672 423 A1**
(43) Date of publication of application: **21.06.2006**
(21) Application number: 04787630.5
(22) Date of filing: 06.09.2004
(51) Int. Cl.: G03B 21/58

(54) **INSTALLATION STRUCTURE OF PROJECTION SCREEN**

(30) Priority: 17.09.2003 JP 2003325179; 10.08.2004 JP 2004232976
(71) Applicant: Os Mfg Co., Ltd., Yamazaki-cho Shiso-shi Hyogo 671-2513 (JP)
(72) Inventor: OKUMURA, Masayuki, c/o OS MFG CO., LTD., Hirakata-shi, Osaka 573-0131 (JP); KOTERA, Masayuki, c/o OS MFG CO., LTD., Hirakata-shi, Osaka 573-0131 (JP); TABUCHI, Yoshimitsu, c/o OS MFG CO., LTD., Hirakata-shi, Osaka 573-0131 (JP)
(74) Representative: Vossius & Partner
(86) International application number: PCT/JP2004/012926
(87) International publication number: WO 2005/029176

(57) **Abstract**

An installation structure of a projection screen suitable for conducting rapidly the installation of an accommodation case at a support body and also making it possible to install the accommodation case reliably in any location. A winding roll for winding the projection screen is rotatably provided in an accommodation case 2 and the accommodation case 2 is installed via a plurality of fixing members 3 at a support body. The position of the fixing members 3, 3 with respect to the accommodation case 2 in the direction of rotation axis Y of the winding roll can be changed.

## Description

### TECHNICAL FIELD

The present invention relates to an installation structure of a projection screen for installing an accommodation case where the projection screen is accommodated at a support body such as a wall surface or a ceiling surface via a fixing member.

### BACKGROUND OF THE INVENTION

When an accommodation case of a projection screen is installed, for example, at a wall surface, the accommodation case can be fixed to the wall surface with bolts via brackets serving as fixing members welded to both ends of the accommodation case (for example, Japanese Patent Application Laid-open No. H8-6161).

The accommodation case is most often made from a metal and is a heavy article, especially in screens of a large size. If such a heavy accommodation case is simply fixed with bolts via brackets to a wall surface where no pillars are present at the rear side of the wall, the bolts are sometimes pulled out from the wall surface. As a result, the accommodation case falls from the wall surface.

For this reason it is usually necessary to join a reinforcing material with bolts to the portion of the rear side of the wall surface that has a pillar and then join the accommodation case with the bolts via a bracket to the reinforcing material. With such a configuration requiring a special reinforcing material, not only the cost is increased, but also an operation of fixing the reinforcing material to the wall surface is necessary, and the operation of installing the accommodation case becomes difficult. Accordingly, there is space of improvement.

### DISCLOSURE OF THE INVENTION

With the foregoing view, it is an object of the present invention to provide an installation structure of a projection screen suitable for conducting rapidly the installation of an accommodation case at the support body and also making it possible to install the accommodation case reliably in any location.

In order to resolve the above-described problems, the present invention provides an installation structure of a projection screen in which a winding roll for winding the projection screen is rotatably provided in an accommodation case and the accommodation case is installed via a plurality of fixing members at a support body, wherein the position of the fixing members with respect to the accommodation case in the rotation axis direction of the winding roll can be changed.

The fixing member may have a substantially inverted L shape comprising a horizontal section extending forward in a substantially horizontal direction from a wall surface, which is the support body, and a vertical section extending downward substantially parallel to the wall surface from the base end section of the horizontal section, and the accommodation case may be composed of a case body that serves to install and support rotatably the winding roll and has a substantially inverted L shape, which is substantially identical to the shape of the fixing member, and a cover member that is detachably attached to the case body for covering the front section of the case body.

A holding section capable of locking and holding a horizontal piece that protrudes upward from the front end of a horizontal section constituting the case body of the accommodation case and then extends rearward in the horizontal direction is provided at the vertical end surface on the front side of the horizontal section constituting the fixing member, and a locking member, which has a receiving section that is inserted from below between a vertical piece protruding rearward from the upper end portion of the base end section of the horizontal section constituting the accommodation case and then extending downward and a vertical section constituting the accommodation case and that receives the vertical piece from below, and which also abuts and prevents the movement of the accommodation case in the direction of withdrawing from the fixing member, is provided to the fixing member in a state of being biased upward.

The locking member is made from a synthetic resin, and has, at the upper end of a body, a receiving section that is locked from below between the vertical piece and the vertical section of the accommodation case and receives the vertical piece from below, and a locking section for abutting and preventing the movement of the accommodation case in the direction of withdrawing from the fixing member, and the locking member also comprises, at the lower end of the body, a wave-like spring section for abutting against the bottom plate section of the fixing member and biasing the body upward and an operation section protruding outwardly from a hole formed in the fixing member and forcibly moving the body downward, the spring section and the operation section being installed side by side.

An auxiliary vertical piece protruding rearward and extending downward is provided at the lower part of the vertical section of the case body constituting the accommodation case and a stopper member inserted between the auxiliary vertical piece and the vertical section of the case body and serving for abutting and preventing the case body from withdrawing from the fixing member is provided to be fixed to the lower end section of the fixing member and to be unfixed therefrom.

The case body is provided with a first locking section for locking the upper end of the cover member, and a second locking section for locking and holding the lower end of the cover member as the cover member is moved toward the case body and the cover member is attached to the case body in a state where the upper end of the cover member is locked to the first locking section.

With the configuration that makes it possible to change the position of the fixing member with respect to the accommodation case in the direction of the rotation axis of the winding roll, an installation structure of a projection screen can be provided such that when the accommodation case is fixed to the wall surface or ceiling, the fixing member can be installed in the site where a pillar is provided at the rear surface at the wall or in the site where a channel member is provided at the rear surface at the ceiling, the fixing member can be strongly fixed to the wall surface, without using a reinforcing material, even in locations where the installation is presently impossible, and the installation of the accommodation case can be carried out rapidly. Another advantage is that the operation of fixing the fixing member to the support body is conducted easier when the accommodation case is fixed to the fixing member after the fixing member has been installed at the support body, but a configuration is also possible in which the fixing material provided at the accommodation case is fixed, while adjusting location, to the specific site of the support body.

Because the fixing member has a substantially inverted L shape comprising a horizontal section extending forward in a substantially horizontal direction from a wall surface, which is the support body, and a vertical section extending downward substantially parallel to the wall surface from the base end section of the horizontal section, and the accommodation case comprises of a case body that serves to install and support rotatably the winding roll and has a substantially inverted L shape, which is substantially identical to the shape of the fixing member, and a cover member that is detachably attached to the case body for covering the front section of the case body, the shape retention strength can be increased by comparison with the plate-shaped fixing member. Furthermore, not only the cover member can be removed to conduct the maintenance of the screen located inside the case body, but also only the fractured cover member can be replaced.

Because a holding section capable of locking and holding a horizontal piece that protrudes upward from the front end of a horizontal section constituting the case body of the accommodation case and then extends rearward in the horizontal direction is provided at the vertical end surface on the front side of the horizontal section constituting the fixing member, and a locking member, which has a receiving section that is inserted from below between a vertical piece protruding rearward from the upper end portion of the base end section of the horizontal section constituting the accommodation case and then extending downward and a vertical section constituting the accommodation case and that receives the vertical piece from below, and which also abuts and prevents the movement of the accommodation case in the direction of withdrawing from the fixing member, is provided to the fixing member in a state of being biased upward, the accommodation case can be held with respect to the fixing material by a locking action, and the operation resulting in the accommodation case being held in the fixing material can be conducted faster than in the configurations in which the accommodation case is held at the fixing material with screws or the like. This configuration is especially effective with heavy accommodation cases.

Because the locking member has, at the upper end of a body, a receiving section made from a synthetic resin that is locked from below between the vertical piece and the vertical section of the accommodation case and receives the vertical piece from below, and a locking section for abutting and preventing the movement of the accommodation case in the direction of withdrawing from the fixing member, and the locking member also comprises, at the lower end of the body, a wave-like spring section for abutting against the bottom plate section of the fixing member and biasing the body upward and a operation section protruding outwardly from a hole formed in the fixing member and forcibly moving the body downward, the spring section and the operation section being installed side by side, the locking state can released and the accommodation case can be removed from the fixing material by holding the operation section and pulling it downward. From the standpoint of a total cost including the assembly cost and storage and maintenance cost, this configuration is superior to a configuration in which those three members, that is, the locking member, spring member, and operation section are provided separately and assembled.

Because the auxiliary vertical piece protruding rearward and extending downward is provided at the lower part of the vertical section of the case body constituting the accommodation case and a stopper member inserted between the auxiliary vertical piece and the vertical section of the case body and serving for abutting and preventing the case body from withdrawing from the fixing member is provided to be fixed to the lower end section of the fixing member and to be unfixed therefrom, the accommodation case can be reliably prevented form being separated from the fixing material with the stopper member even when the locking with the locking member is released.

Because the case body is provided with the first locking section for locking the upper end of the cover member, and the second locking section for locking and holding the lower end of the cover member as the cover member is moved toward the case body and the cover member is attached to the case body in a state where the upper end of the cover member is locked to the first locking section, only the upper and lower ends of the cover member are locked to and held by the case body, the cover member in the attached state is prevented from being easily separated form the case body, the number of components and assembly operations can be reduced, and high reliability can be attained.

### BRIEF DESCRIPTION OF THE DRAWINGS

Fig. 1 is a perspective view of a projection screen;
Fig. 2 is a side view of a projection screen installed between a ceiling surface and a wall surface;
Fig. 3 is a side view with a longitudinal section of a projection screen installed between a ceiling surface and a wall surface;
Fig. 4 is a front view with a longitudinal section in which part of the projection screen is omitted;
Fig. 5 is an exploded perspective view of one end side of the projection screen;
Fig. 6 is a perspective view at one end side of a projections screen immediately before the cap is installed;
Fig. 7 is a side view with a longitudinal section of a large projection screen which accommodates a screen larger than the screen shown in Fig. 2;
Fig. 8 is a side view with a longitudinal section of a large projection screen which accommodates a screen larger than the screen shown in Fig. 7;
Fig. 9 is a side view with a longitudinal section of a projection screen in a state where a winding roll is supported at another bracket;
Fig. 10 is a side view with a longitudinal section of a projection screen in a state where a winding roll is supported at another bracket;
Fig. 11 is a side view with a longitudinal section of a projection screen in a state where a winding roll is supported at another bracket; (a) illustrates a state in which the cover member is attached to the case body; (b) illustrates a state immediately before the cover member is attached to the case body; and (c) illustrates a state where the cover member was removed from the case body; and
Fig. 12 is a perspective view of the bracket shown in Fig. 11.

### BEST MODE FOR CARRYING OUT THE INVENTION

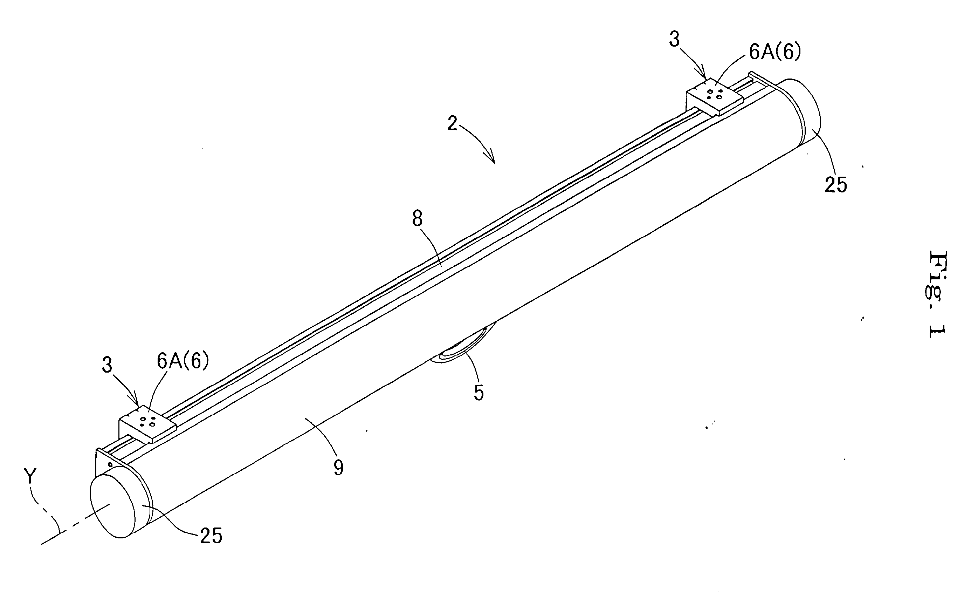

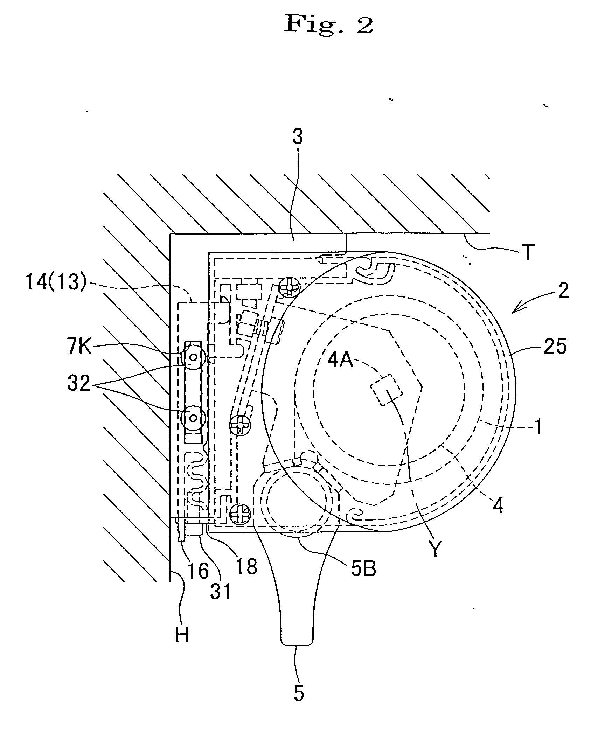

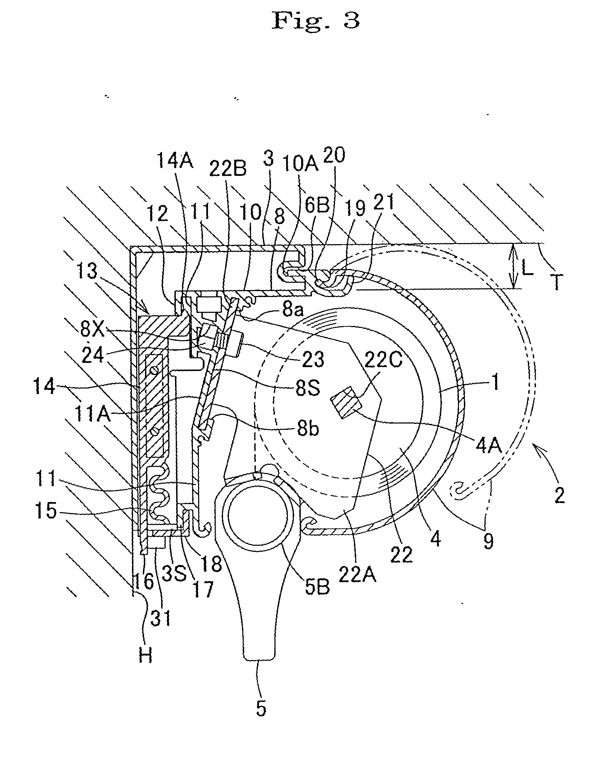

Fig. 1 shows an accommodation case 2 having accommodated therein a projection screen 1 (see Fig. 3) that can be used upon fixing to a support body. The accommodation case 2 is configured as a projection screen that can be fixed to a wall surface or a ceiling surface via a plurality of fixing members 3, 3 provided so that they are free to slide in the left-right direction at the rear side of the accommodation case. As shown in Fig. 2 and Fig. 3, the accommodation case can be installed in the corner of a ceiling surface T and a wall surface H. The aforementioned wall or ceiling is referred to as a support body, but any structure, such as pillars, that is capable of withstanding earthquake or other vibrations or shocks can be also referred to as a support body. Here, the accommodation case 2 is fixed to the support body with two fixing members 3, 3, but the accommodation case 2 can be also fixed to the support body with three or more fixing members to support the accommodation case 2 by distributing the load from the fixing members between three or more fixing members. The advantage of such fixing is that the accommodation case 2 can be more reliably prevented from being separated from the support body.

The screen 1 is so configured that it can change its state between an accommodation state in which the screen is wound around a winding roll 4 provided rotatably inside the accommodation case 2 (see Fig. 2) and a utilization state (not shown in the figure) in which a handle 5 mounted on the lower end of the screen 1 is pulled down to pull out the screen and make it suitable for projecting an image from a projector or the like. The handle 5 is fixed to the lower end almost in the center in the left-right direction of a bar 5B that is mounted on one end of the screen 1 for controlling the winding position of the screen 1.

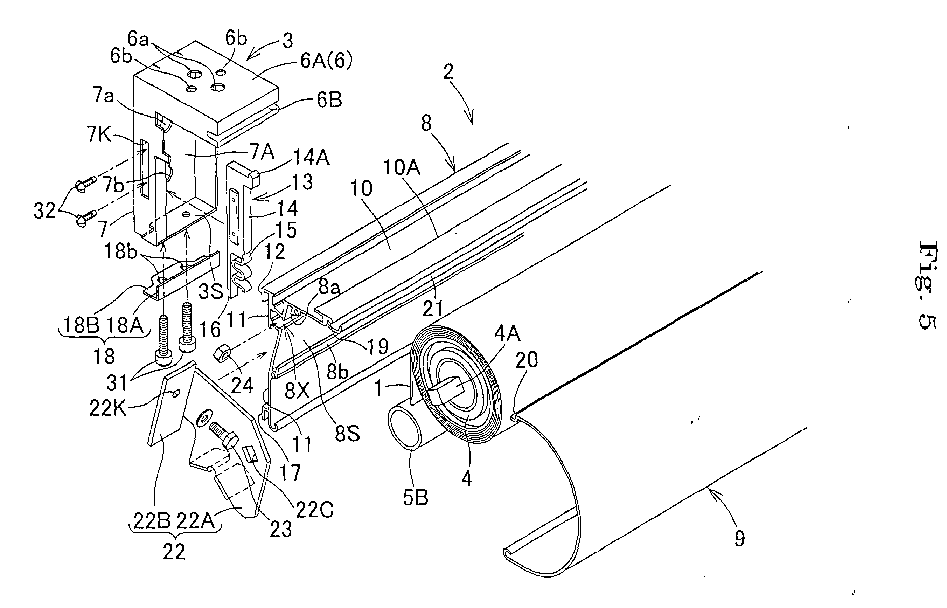

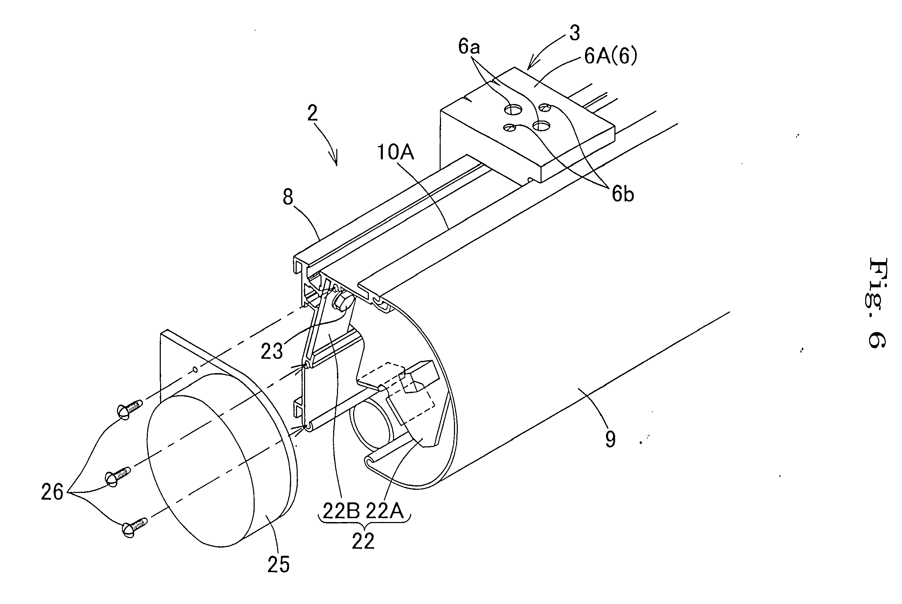

As shown in Fig. 5 and Fig. 6, the fixing member 3 has a substantially inverted L shape in a side view thereof, this shape comprising a horizontal section 6 extending forward in a substantially horizontal direction from the wall surface and a vertical section 7 extending downward substantially parallel to the wall surface from the base end section of the horizontal section 6 on the wall surface side thereof so as to assume a state substantially parallel to the wall surface. From the standpoint of strength, it is preferred that the fixing member be made from a metal material, but sometimes it may be made from a synthetic resin or wood. Two large and two small bolt insertion holes 6a, 6a, 6b, 6b of different size are formed in the upper end plate section 6A constituting the horizontal section 6 of the fixing member 3, bolt insertion holes 7a, 7b are formed in two (upper and lower) locations of a back plate section 7A constituting the vertical section 7 of the fixing member 3, thereby making it possible to fix the fixing member 3 with bolts to both the ceiling surface and the wall surface or to one of them.

As shown in Fig. 2, Fig. 3, Fig. 5, and Fig. 6, the accommodation case 2 comprises a case body 8 that serves to install and support rotatably the winding roll 4 and has a substantially L shape, which is substantially identical to the shape of the fixing member 3, and a cover member 9 that is in the form of a substantially semicircular arc in the side view and serves to cover the front section of the case body 8. From the standpoint of strength, it is preferred that the accommodation case be made from a metal material, but sometimes it may be made from a synthetic resin or wood.

As shown in Fig. 3 and Fig. 5, a concave section 6B serving as a holding section capable of locking and holding from the horizontal direction a horizontal piece 10A that protrudes upwardly from the front end of a horizontal section 10 constituting the case body 8 of the accommodation case 2 and then extends rearward in the horizontal direction is provided at the vertical end surface on the front side of the horizontal section 6 constituting the fixing member 3, and a locking member 13, which has a receiving section that is inserted from below between a vertical piece 12 protruding rearward from the upper end portion of the base end section of the horizontal section 10 constituting the accommodation case 2 and then extending downwardly and a vertical section 11 constituting the accommodation case 2 and that receives the vertical piece 12 from below, and which also abuts and prevents the movement of the accommodation case 2 in the direction of withdrawing from the fixing member 3, is provided to the fixing member 3 in a state of being biased upward.

The locking member 13 has, at the upper end of a body 14, a receiving section made from a synthetic resin that is locked from below between the vertical piece 12 and the vertical section 11 of the accommodation case 2 and receives the vertical piece 12 from below, and a locking section 14A for abutting and preventing the movement of the accommodation case 2 in the direction of withdrawing from the fixing member 3, and the locking member 13 also comprises, at the lower end of the body 14, a wave-like spring section 15 for abutting from above against the bottom plate section 3S of the fixing member 3 and biasing the body 14 upward and an operation section protruding outwardly from a hole 3K formed in the fixing member 3 and forcibly moving the body 14 downward, the spring section 15 and the operation section 16 being installed side by side. Furthermore, as shown in Fig. 2 and Fig. 5, the locking member 13 can move in the up-down direction on two screws 32, 32 via elongated hole 7K extending in the up-down direction and formed in the transverse wall section of the vertical section 7 and is mounted on the fixing member 3 in a state of being biased upward by the spring section 15.

An auxiliary vertical piece 17 protruding rearward and extending downwardly is provided at the lower part of the vertical section 11 of the case body 8 constituting the accommodation case 2, and a stopper member 18 inserted between the auxiliary vertical piece 17 and the vertical section 11 of the case body 8 and serving for abutting and preventing the case body 8 from withdrawing in the direction of separating from the fixing member 3 is provided via a plurality of bolts 31 at the bottom plate section 3S of the fixing member 3 so that the stopper member 18 can be fixed and unfixed. The stopper member 18 comprises a longitudinal plate section 18A inserted between the auxiliary vertical piece 17 and vertical section 11 of the case body 8 and a horizontal plate section 18B extending from the lower end of the longitudinal plate section 18A in the horizontal direction toward the wall surface, and bolt insertion holes 18b, 18b are formed in the horizontal plate section 18B. The vertical sections 11 are disposed in two locations at the upper end and lower end of the case body 8, and those two vertical sections 11, 11 are linked to the tilted plate section 11A forming a below-described fixing surface 8S.

When the accommodation case 2 is installed in the corner formed by a ceiling surface and wall surface, for example, as shown in Fig. 2, a plurality of fixing members 3, 3 (here, two fixing members are shown, but three or more fixing members may be used) are disposed with the prescribed spacing in the corner and fixed by using bolts (not shown in the figure) to pillars in the rear surface of the wall or channel members at the rear of the ceiling. Then, the accommodation case 2 is locked and temporarily fixed to the fixing members 3, 3 with the locking members 13, 13 provided thereon, and then the stopper member 18 is fixed to the bottom plate section 3S of the fixing member 3 via a plurality of bolts 31. Furthermore, before the accommodation case 2 is completely fixed to the fixing members 3, 3 with the stopper member 18, the position of the fixing members 3, 3 with respect to the accommodation case 2, that is the position of the fixing members 3, 3 in the direction Y of rotation axis (see Fig. 1) with respect to the winding roll 4, can be adjusted by releasing the locking by pulling the operation section 16 of the locking member 13 downward.

An upward upper end 20 in the form of a substantially semicircular arc is provided at the upper rear end section of the cover member 9, a concave section 19 in the form of a circular arc positioned so as to rise with the transition in the rearward direction at the front end of the case body 8 is formed so as to lock with the upper end 20, a lower protruding piece 21 of a pair of upper and lower protruding pieces forming the concave section 19 is caused to protrude forward and then caused to protrude upward, thereby forming a protruding section. As a result, the rearward side portion located at the upper side of the cover member 9 can be received from below and supported on the upper end (distal end) of this protruding section 21. Therefore, as shown in Fig. 3, the locking section 20 can be released from the concave section 19 by shaking the cover member 9 upward by holding the lower part thereof as far as a position shown by a two-point-dash line. After the locking has thus been released, the cover member 9 can be removed from the case body 8 by moving the cover member 9 forward. When the fixing members 3, 3 are installed between the ceiling surface and wall surface, the cover member 9 can be removed even if the accommodation case 2 is not removed from the fixing members 3, 3 by setting the up-down size L of the fixing member 3 so that the cover member 9 can be shaken upward to a position enabling the release of the locking section 20 from the concave section 19 as described hereinabove.

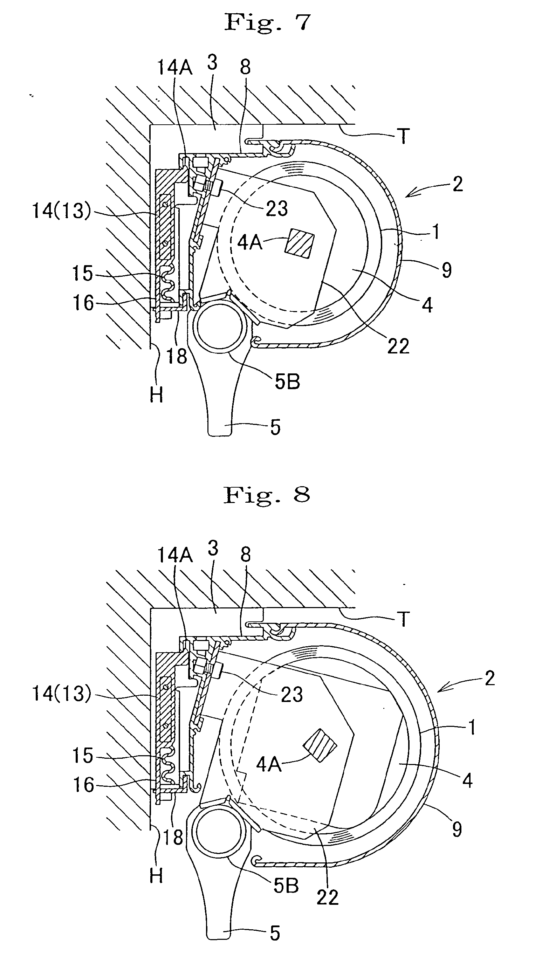

Spindles 4A of the fixed (not rotating) side that are provided at both ends of the winding roll 4 and have different sizes (may have the same size) are passed through and supported by brackets 22, 22 detachably mounted on the case body 8. The brackets 22, 22 comprise plate-shaped bracket bodies 22A for holding the spindles 4A passing therethrough and flange sections 22B produced by bending the rear end sections of the bracket bodies 22A at an angle of almost 90 degree and serving for fixing to the case body 8. The fixing surface 8S of the case body 8 for fixing the flange section 22B is composed of a forward-tilted surface that is positioned forward at the upper side, and the brackets 22 are configured to assume a tilted posture such that the front end section side thereof is positioned lower when the brackets 22, 22 are fixed to the case body 8. Thus, as shown in Fig. 7 and Fig. 8 (Fig. 8 illustrates the installation of screen larger than that shown in Fig. 7) a larger screen 1 (winding roll 4) can be installed by installing the bracket 22 at the case body 8 so that the bracket is tilted. In other words, though the fixing materials 3, 3, case body 8, and brackets 22, 22 are used as common members, a large-size screen 1 (winding roll 4) can be installed by merely replacing the cover member 9 with a cover member of a larger size. Here, both brackets 22, 22 provided at both ends are configured so that they can be attached to and detached from the case body 8, but they may be also so configured that only one bracket 22 can be detached.

A pair of upper and lower locking and holding sections 8a, 8b for locking and holding the flange section 22B so that it can slide in the direction of the rotation axis of the winding roll 4 is provided at the case body 8. A concave section 8X is formed in the case body 8, this concave section serving to hide the distal end of a bolt 23, which is a threaded body passed through a through hole 22K formed in the flange section 22B behind the fixing surface 8S, and to accommodate a nut 24 that is screwed on this distal end in a state where the flange section 22B is locked and held with the locking and holding sections 8a, 8b.

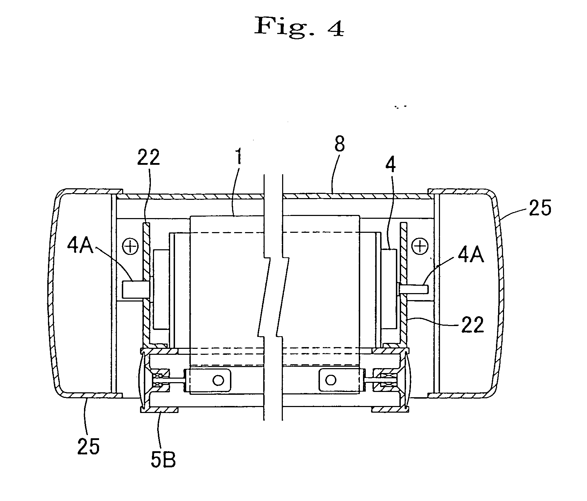

As shown in Fig. 4 and Fig. 6, caps 25 for covering the openings of the end sections are fixed with a plurality of screws 26 to both ends of the accommodation case 2, but a configuration in which the caps 25 are fixed by external fitting onto the accommodation case 2 may be also used.

A configuration making it possible to remove the winding roll 4 from the accommodation case 2 for inspection or replacement with another winding roll will be described below. First, the caps 25, 25 located at both ends are removed and the cover member 9 is removed. Then, one of the brackets 22 is removed from the case body 8. The winding roll 4 is then moved toward the side in the left-right direction where the bracket 22 was removed, the spindle 4A of the winding roll 4 is pulled from the other bracket 22, and the winding roll 4 is removed. When the winding roll 4 cannot be moved toward the side in the left-right direction where the bracket 22 was removed, both brackets 22, 22 are removed. When the removed winding roll 4 is installed again or when another winding roll is installed, the spindles 4A, 4A of the winding roll 4 are inserted into the brackets 22, 22, then the brackets 22, 22 are fixed to the case body 8 by using bolts 23 and nuts 24, and then caps 25, 25 located at both ends are set and the cover member 9 is installed, thereby completing the operation.

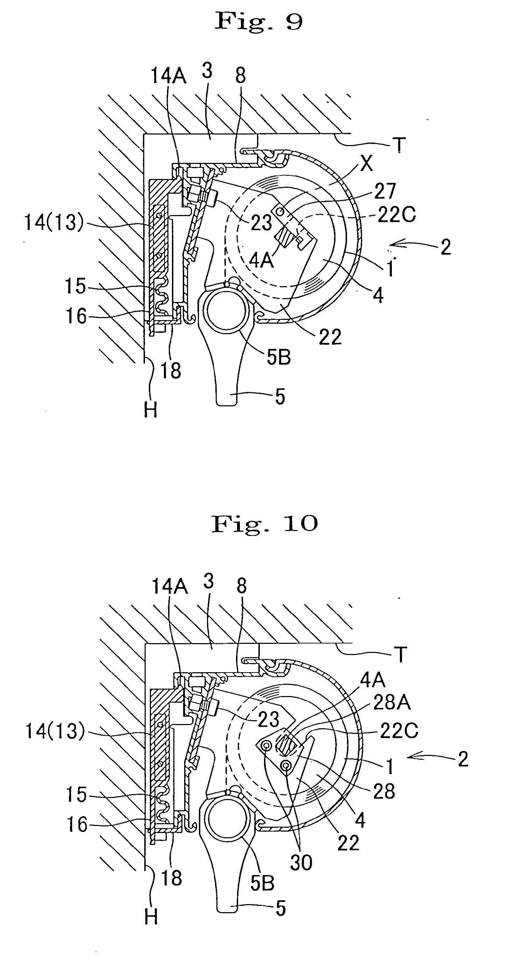

As shown in Fig. 9 and Fig. 10, the through hole 22C of the spindle 4A of the winding roll 4 in the brackets 22, 22 is configured as a notch open upward at an angle, and a lock member 27 or 28 for fixing the spindle 4A of the winding roll 4 in the notch 22C is provided so that it can be fixed therein or released therefrom. The advantage of such a configuration is that the winding roll 4 can be moved easily and rapidly without removing the brackets 22, 22. The lock member 27 shown in Fig. 9 is installed so that it can be swung in the bracket 22 around the horizontal axis X, and the distal end of the lock member 27 can be locked to the bracket 22 and released therefrom. The lock member 28 shown in Fig. 10 comprises a plate member comprising a through hole 28A for passing the spindle 4A of the winding roll 4, and the lock member 28 is provided so that it can be fixed to the bracket 22 with screws 30 and unfixed therefrom.

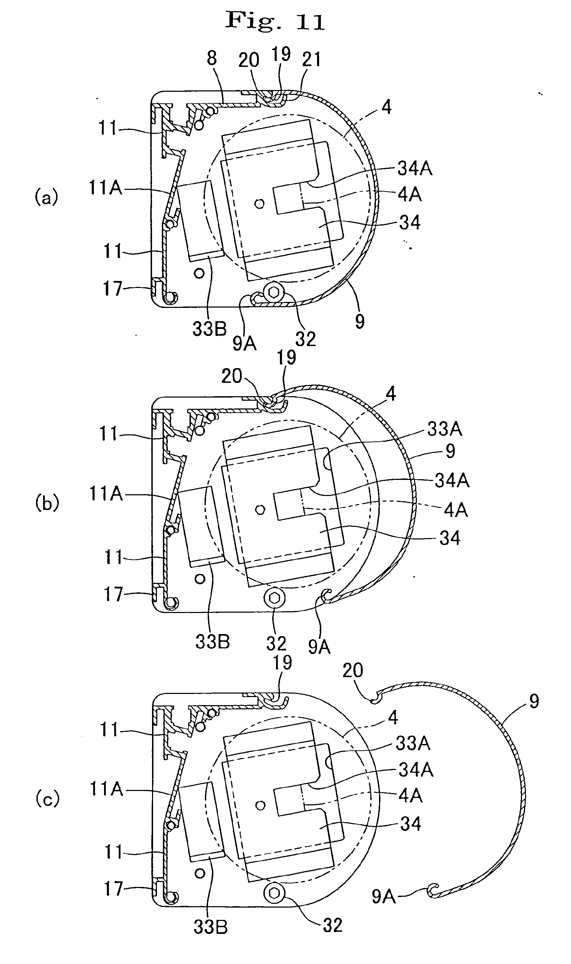

Fig. 1 to Fig. 10 illustrate the configuration in which the upward upper end 20 in the form of a substantially semicircular arc was provided at the upper rear end section of the cover member 9, the circular-arc concave section 19 positioned above the front end of the case body 8 toward the rear side thereof was formed as a first locking section for locking to the upper end 20, and the upper end 20 of the cover member 9 was locked to the first locking member 19, but the configurations shown in Fig. 11(a), (b), and (c) may be also employed. In other words, after the upper end 20 of the cover member 9 has been locked to the first locking section 19, as the cover member 9 is moved toward the case body 8 and the cover member 9 is attached the case body 8, the screws 32 serving as second locking sections for locking the lower ends of the cover member 9 are screwed into the below-described left and right brackets 33 and fixed. Therefore, when the upper end 20 of the cover member 9 removed from the case body 8 as shown in Fig. 11(c) is locked to the first locking section 19 and the cover member 9 is swung downward about the first locking section 19 as a support point as shown in Fig. 11(b), the lower end 9A of the cover member 9 that was bent to a circular arc shape moves over the second locking section 32 due to the elastic force thereof and becomes positioned behind the second locking section 32. As a result, the distal end of the lower end 9A abuts against the second locking section 32, and swinging movement above the cover member 9 is prevented. With such a configuration for locking and holding the upper and lower ends 20, 9A of the cover member 9 to the case body 8, as shown in Fig. 1 to Fig. 10, the cover member 9 can be prevented from easily separating from the case body 8, even though parts of caps 25, 25 are externally fitted and not fixed to the cover member 9. Moreover, only the cover member 9 can be rapidly removed from the case body 8, without removing the caps 25, 25. When the cover member 9 is removed, the lower end 9A can be slightly pushed downward, e.g., with a finger by using the elastic force of the lower end (the lower end is pushed to a position in which it does not come into contact with the second locking section 32) and then the cover member 9 can be removed from the case body 8 by swinging upward about the first locking member 19 as a point of support. Other configurations shown in the figures are identical to the above-described configuration and explanation thereof is omitted.

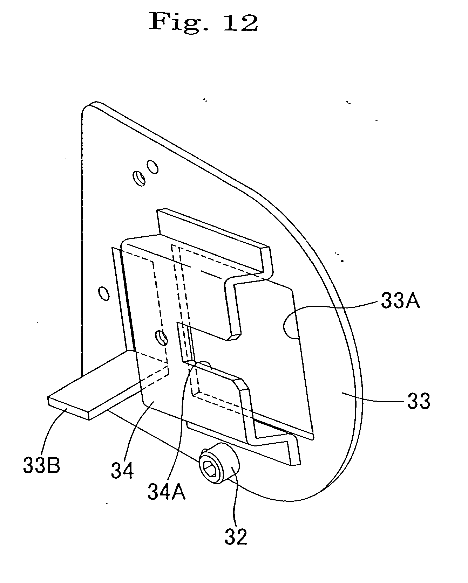

Configuring the left and right brackets 22, 22 shown in Fig. 1 to Fig. 10 as shown in Fig. 11(a), (b), (c) and Fig. 12 makes it possible to remove only the cover member 9 form the case body 8, without externally fixing parts of the caps 25, 25 shown in Fig. 1 to Fig. 10 onto both (left and right) ends of the cover member 9 and without removing the caps 25, 25 in the above-described manner. In other words, an arch-shaped (gate-shaped) bracket 34 having formed therein a notch 34A capable of supporting the spindle 4A of the winding roll 4 inserted therein is fixed to the inner surface of the plate member 33 that is in contact with both (left and right) surfaces of the case member 8 and cover member 9, screwed to the case body 8 and has the cap 25 screwed thereto from the outer surface side. A through hole 33A for hiding the spindle 4A is formed in the plate member 33. Furthermore, a substantially horizontal protruding piece 33B is configured by cutting a substantially inverted U-shaped notch in the rear portion of the plate member 33 and bending this portion inwardly.

### INDUSTRIAL APPLICABILITY

The installation structure of the screen in accordance with the present invention is adapted for changing the accommodation state of screen 1 into the utilization state by pulling the handle 5 down, and also can be adapted for changing the accommodation state of screen 1 into the utilization state by rotating the winding roll with electric power of an electric motor. The specific configuration and shape of the accommodation case are not limited to those shown in the figures and can be freely changed.

## Claims

1. An installation structure of a projection screen in which a winding roll for winding the projection screen is rotatably provided in an accommodation case and said accommodation case is installed via a plurality of fixing members at a support body, **characterized in that** a position of said fixing members with respect to said accommodation case in a rotation axis direction of said winding roll can be changed.

2. The installation structure of a projection screen according to claim 1, **characterized in that** said fixing member has a substantially inverted L shape comprising a horizontal section extending forward in a substantially horizontal direction from a wall surface, which is the support body, and a vertical section extending downward substantially parallel to said wall surface from the base end section of the horizontal section, and said accommodation case comprises a case body that serves to install and support rotatably said winding roll and has a substantially inverted L shape, which is substantially identical to the shape of said fixing member, and a cover member that is detachably attached to said case body for covering the front section of the case body.

3. The installation structure of a projection screen according to claim 2, **characterized in that** a holding section capable of locking and holding a horizontal piece that protrudes upward from the front end of a horizontal section constituting the case body of said accommodation case and then extends rearward in the horizontal direction is provided at the vertical end surface on the front side of the horizontal section constituting said fixing member, and a locking member is provided to said fixing member in a state of being biased upward, the locking member having a receiving section that is inserted from below between a vertical piece protruding rearward from the upper end portion of the base end section of the horizontal section constituting said accommodation case and then extending downward and a vertical section constituting said accommodation case and that receives said vertical piece from below, the locking member also abutting and preventing the movement of said accommodation case in the direction of withdrawing from said fixing member.

4. The installation structure of a projection screen according to claim 3, **characterized in that** said locking member is made from a synthetic resin and said locking member has, at the upper end of a body, a receiving section that is locked from below between said vertical piece and the vertical section of said accommodation case and receives said vertical piece from below, and a locking section for abutting and preventing the movement of the accommodation case in the direction of withdrawing from said fixing member, and said locking member also comprises, at the lower end of the body, a wave-like spring section for abutting against the bottom plate section of said fixing member and biasing the body upward and an operation section protruding outwardly from a hole formed in said fixing member and forcibly moving said body downward, the spring section and the operation section being installed side by side.

5. The installation structure of a projection screen according to any one of claims 2 to 4, **characterized in that** an auxiliary vertical piece protruding rearward and extending downward is provided at the lower part of the vertical section of the case body constituting said accommodation case and a stopper member inserted between the auxiliary vertical piece and the vertical section of said case body and serving for abutting and preventing said case body from withdrawing from said fixing member is provided to be fixed to the lower end section of said fixing member and to be unfixed therefrom.

6. The installation structure of a projection screen according to claim 2, **characterized in that** said case body is provided with a first locking section for locking the upper end of said cover member, and a second locking section for locking and holding the lower end of said cover member as said cover member is moved toward said case body and said cover member is attached to said case body in a state where the upper end of said cover member is locked to said first locking section.
